## Europäisches Patentamt

## European Patent Office

## Office européen des brevets

(11) Publication number: **0 195 566**
**A2**

# (12) EUROPEAN PATENT APPLICATION

(21) Application number: **86301632.5**

(22) Date of filing: **07.03.86**

(51) Int. Cl.⁴: **G 02 B 5/00**
**G 02 B 13/00**

(30) Priority: **08.03.85 ES 541064**
**27.04.85 ES 542636**
**25.05.85 ES 543501**

(43) Date of publication of application:
**24.09.86 Bulletin 86/39**

(84) Designated Contracting States:
**AT BE CH DE FR GB IT LI LU NL SE**

(71) Applicant: **Moreno Gil, Oscar**
**Avda. del Manzanares 86**
**Madrid(ES)**

(72) Inventor: **Moreno Gil, Oscar**
**Avda. del Manzanares 86**
**Madrid(ES)**

(74) Representative: **Mayes, Stuart David et al,**
**BOULT, WADE & TENNANT 27 Furnival Street**
**London, EC4A 1PQ(GB)**

(54) **Lenticular optical cone.**

(57) Conical lenses of inharmonious, nonparallel surfaces, called lenticular cones, are described. Such cones have two conical surfaces, one concave and the other convex, and their sides are formed by respective cones of different openings. The cone walls are of variable thickness, and can be thinnest near the vertex of the cone, increasing in thickness to a maximum at the base of the cone, or thickest at the vertex of the cone and decreasing in thickness to a minimum at the base of said cone.

Optical objectives formed by lenticular optical cones and/or conical lenses are also described.

FIG. I.

# LENTICULAR OPTICAL CONE

This invention relates to conical optical lenses and in particular to conical lenses of inharmonious, nonparallel surfaces, called lenticular cones.

As is known, a conical lens (which has also been called, incorrectly, an "axicone") has one or both sides of conical shape. The conical shape of each side of the lens can constitute a complete or a truncated cone. The sides of the complete cone form a cone whose base is the largest circle of the lens and which ends in a vertex situated in the axis of the lens (focal axis). The sides of the truncated cone form a cone frustum of the same base as the complete cone.

Each lens can have one flat side and the other conical, or both conical, or one curved side and the other conical. Each cone (or cone frustum) can project outwardly or inwardly, seen from the base. When the two sides are of conical structure they can be of the same sign (that is, both projecting outwardly or inwardly) or of opposite sign (that is, one projecting outwardly and the other inwardly), and when one side is curved it can be concave or convex and combine with the other either concave or convex conical side.

According to the foregoing, possible lens combinations are as follows:

A) Exclusively conical lenses

1. Plano-convexo-conic

2. Plano-concavo-conic

3. Biconic-convexo-conic

4. Biconic-concavo-conic

5. Conico-concave-convexo-conic

6. Conico-convex-concavo-conic

B) <u>Curvo-conical lenses</u>

1. Curvo-convex-convexo-conic

2. Curvo-concave-convexo-conic

3. Curvo-convex-concavo-conic

4. Curvo-concave-concavo-conic

Naturally, the light falling vertically upon the lenses will be convergent or divergent. It will be convergent in all cases of plano-convexity and bi-convexity, but divergent in all cases of plano-concavity and bi-concavity.

As regarding conico-convergent lenses, light falling vertically upon one of their sides results in the formation of successive rays whose vertices are situated along the length of the focal axis.

On the other hand, light falling vertically upon conico-divergent lenses separates symmetrically from the focal axis, forming successive cone frustums the prolongation of which in the inverse or opposite part forms complete cones whose vertices are situated in successive points of the focal axis.

One object of this invention is to provide a lenticular optical cone consisting of a conical, concave figure, and formed by transparent optical material. The vertex has a variable angular opening according to the degree of refraction it is desired to obtain, in accordance with the standards and scales to be described farther on in this specification. The walls of the cone are of variable thickness, being thinner in the vertex as thickness increases up to maximum thickness in the base (divergent lenticular optical cone), and being thicker in the vertex as thickness decreases down to minimum thickness in the base (convergent lenticular optical cone). Another object of this invention are different objectives formed by the association of lenticular optical cones and conical lenses.

The invention shall now be described in greater detail with the aid of the drawings.

- Figure 1 represents the behaviour of energy striking two convergent lenses;

- Figure 2 illustrates a divergent lenticular optical cone according to the invention;

- Figure 3 illustrates a convergent lenticular optical cone according to the invention;

- Figures 4a-4c illustrate energy behaviour in a convergent lenticular cone;

- Figures 5a-5c illustrate energy behaviour in a divergent lenticular cone; and

- Figures 6a-6d illustrate different objectives formed by the association of lenticular cones and conical lenses.

Before a detailed description is made of the lenticular optical cone constituting the subject matter of this invention, and of the different objectives formed by these cones in association with conical lenses, the behaviour of energy striking different types of lenses shall be described.

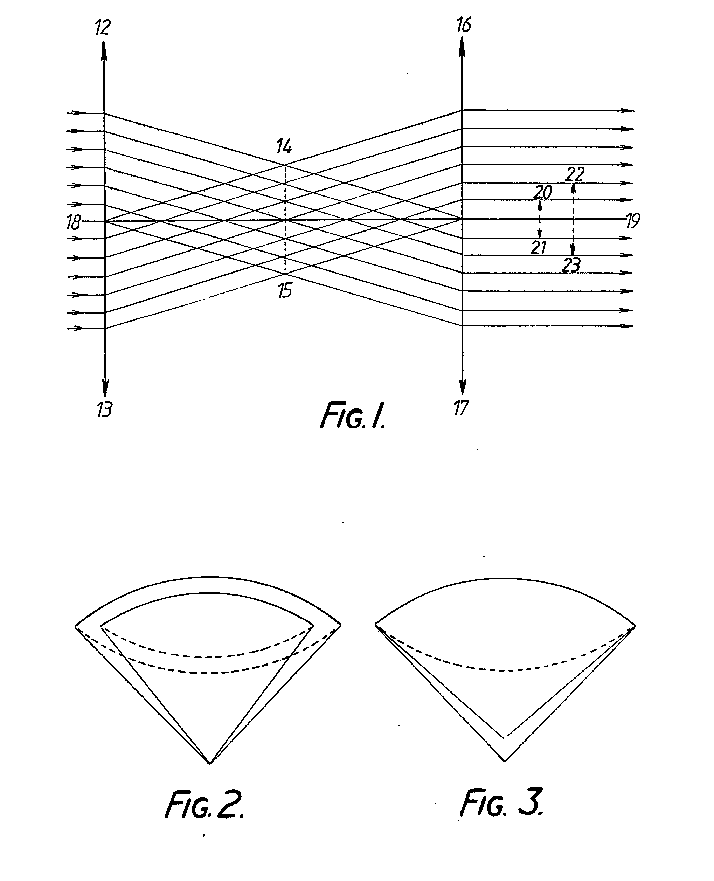

As may be seen in Figure 1, 12-13 and 16-17 represent two conico-convergent lenses, with 18-19 representing the focal axis.

The successive combination of two convergent lenses produces a different effect according to the positioning of the second convergent lens. The second lens can be placed before, in or after the focal normal, the focal normal being the narrowest part of the refraction produced by the first lens, and which in this Figure 1 is the dotted line extending between 14 and 15. As can be observed in this figure, the second conico-convergent lens is situated in the last vertex of the energy cone formed by the first convergent lens (12-13). The second convergent lens refracts all the parallel beams projected the length of the focal axis but in such manner that the light concentration varies throughout the width of the refracted light cylinder. In the central axis the concentration is equal to infinite. The decrease toward the exterior is progressive, the unit equating exactly in the central circumference of the beam refracted by the second lens. Commencing from that central circumference the energy is inferior to the unit, tending to zero on the edges. This energy distribution is what can be called "conical effect" or "conical aberration". Definitely, in this "conical effect" the second lens produces complete reversal of the order of the initially incident light rays, with the result that the light of the outer circles of the first lens is concentrated in the internal portion of the second lens.

In the specific example represented in Figure 1, the circular surface contained between the numbers 20 and 21 has a light concentration eleven times the unit, whereas the circular surface corresponding to the diameter 22-23 has a light concentration five times the unit.

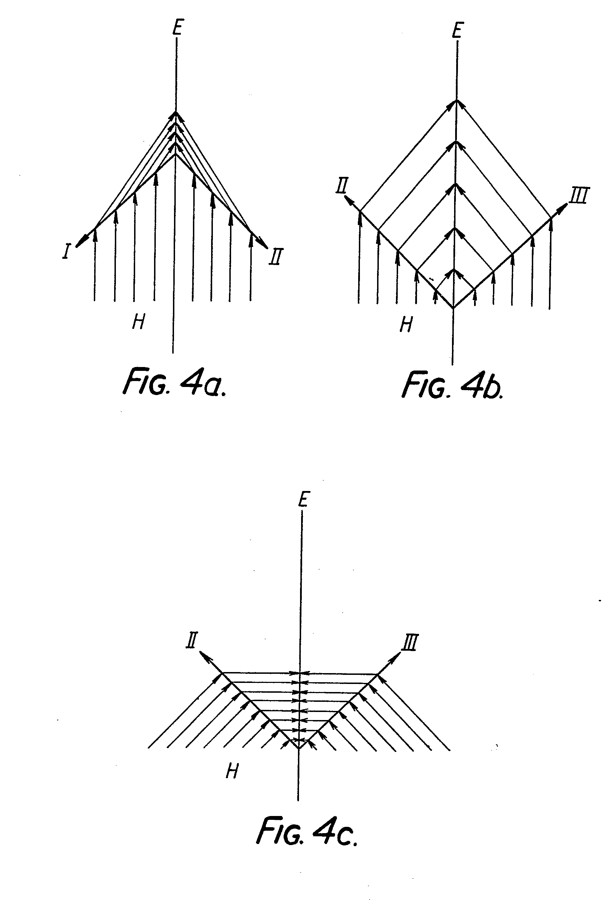

Figures 2 and 3 represent, respectively, divergent and convergent lenticular optical cones, behaviour of the energy in the different lenticular cones being illustrated in Figures 4a to 4c and 5a to 5c, respectively.

In effect, with reference to Figure 4a it can be seen that a bundle of light rays (H) is projected, parallel to the focal axis (E), upon the concave surface (I-II) of the convergent lenticular cone, and from refraction said emerging bundle converges on the focal axis in rays parallel to one another which form a very closed angle, the light thus being highly concentrated.

In Figure 4b, the bundle of light rays (H) is projected, also parallel to the focal axis (E), upon the convex surface (II-III) of the convergent lenticular cone, and from refraction the converging bundle also converges on the focal axis in rays parallel to one another which form an angle less closed than in the case of Figure 4a. This angular difference is due to the different position of the lenticular cone.

In Figure 4c, a bundle of light rays (H) is projected, also parallel to one another but not with respect to the focal axis (E), upon the entire convex surface (II-III) which they strike vertically. The concentration produced tends to coincide with the traverse to the focal axis.

As to the behaviour of the energy striking divergent lenticular cones, Figure 5a illustrates how a bundle of rays (H) parallel to one another but not with respect to the focal axis (E) falls vertically upon the entire convex surface (IV-V) of the divergent lenticular cone. As a consequence and because of the divergence, the refracted rays emerge parallel to the focal axis (E).

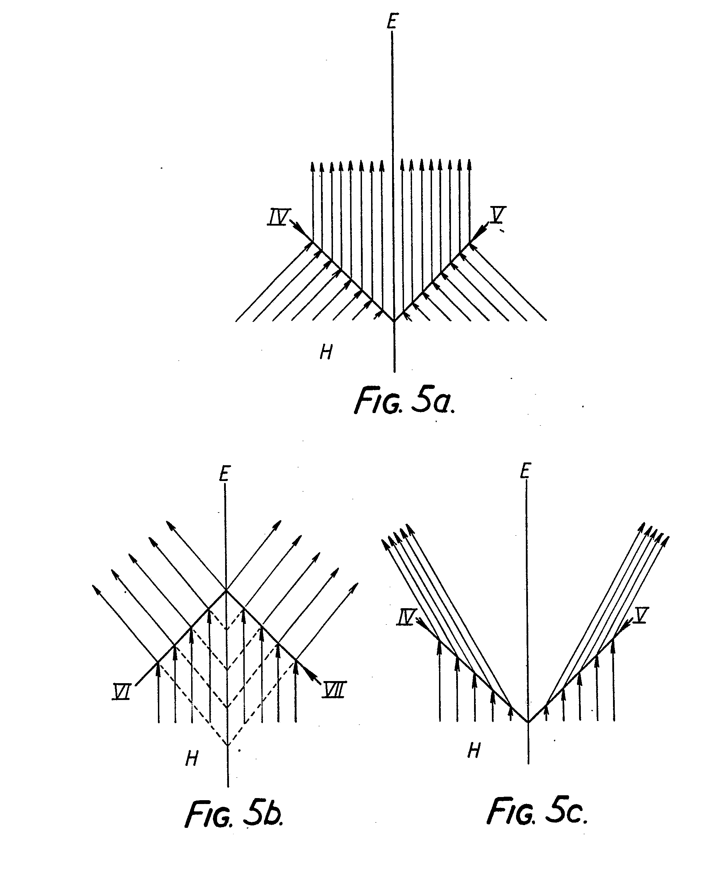

Figure 5b represents a bundle of rays (H) which falls horizontally respective of the focal axis (E) upon the concave surface (VI-VII) of the divergent lenticular cone. As a result, there is divergent deviation of the light projected in parallel rays toward the exterior, in a manner such that the prolongation of the rays forms virtual cones whose vertices are located in the rear portion of the focal axis (E).

In Figure 5c, a light bundle falls horizontally with respect to the focal axis (E) upon the convex surface (IV-V) of a divergent lenticular cone. The result is strong parallel divergence of the refracted light, the light bundles closing together after the refraction.

- 6 -

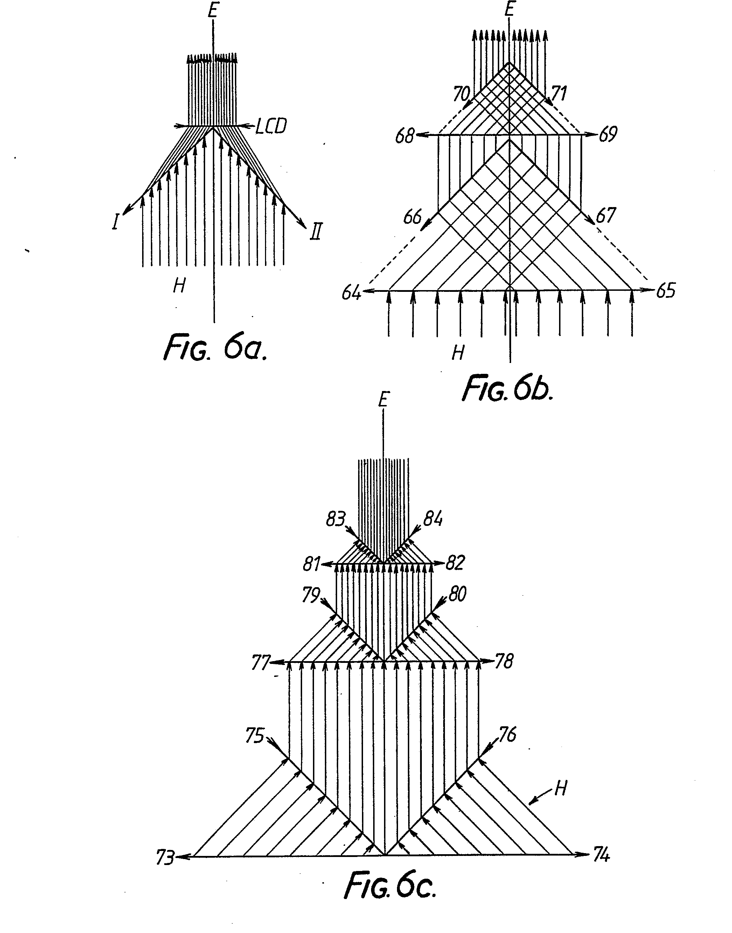

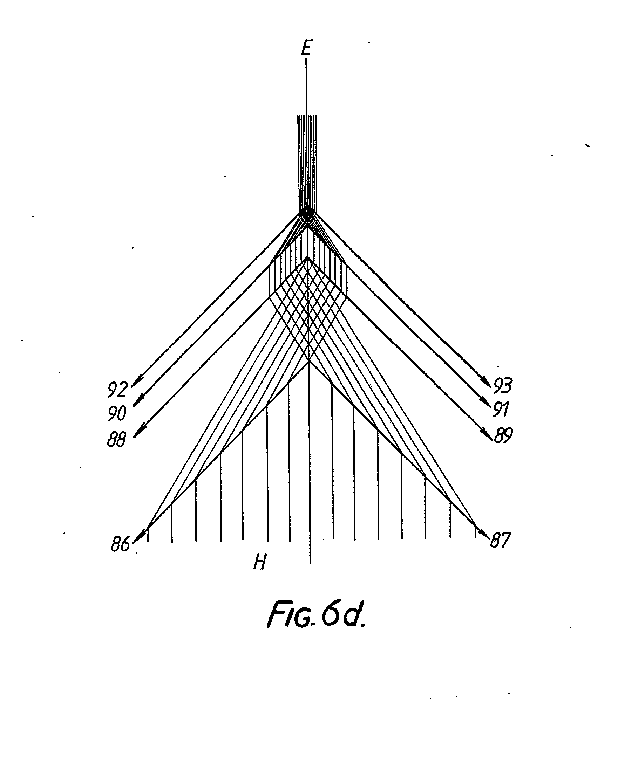

Figures 6a to 6d represent the behaviour of different objectives formed by the association of lenticular cones and conical lenses.

Figure 6a represents a convergent lenticular cone (I-II) followed by a divergent conical lens (LCD) of the same opposing strength as said lenticular cone. With a bundle of rays (H) falling parallel to the focal axis (E) upon the concave portion of the lenticular cone, the refracted light converges in parallel rays on the divergent conical lens, which with the adequate strength and after a second refraction situates the light in parallel rays the length of the focal axis. The result is that the light is highly concentrated, and the image produced following refraction in the divergent conical lens is real and straight.

Figure 6b represents an objective comprised of two convergent conical lenses of equal strength and two convergent lenticular cones, also of the same strength. As can be seen from the figure, the arrangement of these elements is: convergent conical lens (64-65), convergent lenticular cone (66-67), convergent conical lens (68-69) and convergent lenticular cone (70-71). The lenticular cones are situated with their concave surface turned toward the light source, and the vertex of each is in the place corresponding to the last vertex of the light cone formed by each conical lens.

As can be seen from this figure, the light is refracted in the order 64-65, 66-67, 68-69, 70-71, and in such manner that after crossing in the focal axis (E) the various bundles strike the concave surfaces of the lenticular cones, therefore arriving at these surfaces in divergent projection and inverted. Hence each lenticular cone, having the adequate strength, refracts the light parallel to the focal axis. In each of these refractions the light concentration is greater, specifically somewhat more than four times greater after the lenticular cone (66-67) and somewhat more than 16 times greater after the second lenticular cone (70-71). The final image is real and, after two inversions or reversals, straight, the "conical aberration" according to the previously explained theory occurring after the lenticular cone 66-67. That aberration is corrected after the lenticular cone 70-71. The aberration occurs because the order of the incident light rays is totally inverted. It is later corrected because the second inversion situates the rays in their original initial position, although in more concentrated form.

Figure 6c represents an objective formed by three convergent conical lenses and three divergent lenticular cones. The lenses are represented as 73-74, 77-78 and 81-82, while the lenticular cones are represented as 75-76, 79-80 and 83-84. As can be seen from the figure the order is 73-74, 75-76, 77-78, 79-80, 81-82 and 83-84. All the figures, naturally, are centered with respect to the focal axis (E). Both the lenses and the lenticular cones are of the same strength, and thus the light refracted by each convergent lens falls vertically upon the outer convex surface of each divergent lenticular cone, producing following the refraction, after each lenticular cone, a light concentration parallel to the focal axis (E) of approximately four times strength, and thus the final concentration is 64 times the incident light, and after each second refraction the image obtained is real and straight.

So far, objectives formed by the combination of lenticular cones with conical lenses have been described. However, it is possible to combine only lenticular cones, in which the concentration of radiant energy and the attainment of light images is not only possible, but furthermore is considerably more powerful than alternatively combining conical lenses with lenticular cones.

To explain the function of objectives of this type, reference is made to Figure 6d which graphically illustrates four convergent lenticular optical cones (86-87, 88-89, 90-91 and 92-93), situated one after the other and all centered with respect to the same focal axis (E), their respective walls being parallel. Said lenticular cones form respective pairs, namely one formed by 86-87 and 88-89 and the other, in continuation of the first, formed by 90-91 and 92-93. All these convergent lenticular cones, of the adequate strength and so distanced from one another that the distance between each pair is the same as that between the convergent end vertices of the refracted light, successively concentrate the light in very intense proportion and arrange it in parallel beams following refraction by each pair of lenticular cones. The final image obtained is real and straight. Inasmuch as the first pair of lenticular optical cones inverts the order of the initially incident rays, here again there is the "conical aberration" which is corrected following the second total inversion formed by the second pair of lenticular cones.

What is claimed:

1. Lenticular optical cone, characterised in that it comprises two conical surfaces, one concave and the other convex, whose sides or faces are formed by cones of different aperture, and in that its walls are of variable thickness, and can be thinner close to the vertex of the cone, increasing up to maximum thickness in the base of the cone, or can be thicker in the vertex of the cone, decreasing to minimum thickness in the base of said cone, by which means divergent and convergent lenticular optical cones, respectively, are obtained.

2. Lenticular optical cone, characterised in that it can be combined with other lenticular optical cones or with conical lenses to form optical objectives, which in their simplest structure (which can be more complex to correct chromatic aberration) comprise:

a) a convergent lenticular optical cone followed by divergent conical lens which projects parallel rays along the focal axis; or

b) a convergent conical lens followed by a convergent lenticular optical cone which projects parallel rays along the focal axis, both second, to prevent the "conical aberration" of another convergent conical lens and another convergent lenticular optical cone which also project parallel rays along the focal axis; or

c) a convergent conical lens followed by a divergent lenticular optical cone which projects the parallel refracted rays along the focal axis; or

d) a convergent lenticular optical cone followed by a convergent lenticular optical cone which projects the parallel light rays along the focal axis, both followed, to avoid "conical aberration", by another two convergent lenticular optical cones which also project parallel rays along the focal axis.

FIG. 1.

FIG. 2.

FIG. 3.

2/5

0195566

Fig. 4a.

Fig. 4b.

Fig. 4c.

FIG. 5a.

FIG. 5b.

FIG. 5c.

0195566

4/5

FIG. 6a.

FIG. 6b.

FIG. 6c.

Fig. 6d.